(19) **Europäisches Patentamt European Patent Office Office européen des brevets**

(11) **EP 3 754 868 A1**

(12) **EUROPEAN PATENT APPLICATION**

(43) Date of publication:
**23.12.2020 Bulletin 2020/52**

(51) Int Cl.:
*H04B 10/079* (2013.01) *H04B 10/2543* (2013.01)

(21) Application number: **19305782.5**

(22) Date of filing: **18.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Solutions and Networks Oy 02610 Espoo (FI)**

(72) Inventors:
• **RAMANTANIS, Petros**
**94240 L Hay-les-roses (FR)**
• **BIGO, Sebastien**
**91300 Massy (FR)**
• **LONARDI, Matteo**
**37069 Villafranca di Verona (VR) (IT)**

(74) Representative: **Croonenbroek, Thomas Jakob et al**
**Innovincia**
**11, avenue des Tilleuls**
**74200 Thonon-les-Bains (FR)**

(54) **ALL-OPTICAL INTRA-CHANNEL MULTI-WAVELENGTH LINEAR-TO-NONLINEAR POWER RATIO MONITOR**

(57)     A method including along an optical fiber path of a coherent optical communication system, measuring optical powers at different wavelengths of an individual wavelength communication channel of the system and forming an estimate of nonlinear optical degradation of an optical data signal along the optical fiber path based on the measured optical powers at the different wavelengths. An apparatus, including an optical fiber path of a coherent optical communication system, the optical fiber path including one or more optical spectrum analyzers. The optical spectrum analyzers are connected to measure optical powers at a corresponding location along the optical fiber path and configured to measure values of optical powers at different wavelengths in a same individual wavelength communication channel of the optical communication system. The apparatus includes a computing device connected to receive the values of optical powers measured by at least one of the optical spectrum analyzers and configured to form an estimate of nonlinear optical degradation of an optical data signal along the optical fiber path based on the measured optical powers.

FIG. 1

**Description**

**TECHNICAL FIELD**

This application is directed, in general, to an optical network and, more specifically, to an apparatus and method for monitoring for optical distortions and adjusting operations of the optical network.

**BACKGROUND**

This section introduces aspects that may help facilitate a better understanding of the inventions. Accordingly, the statements of this section are to be read in this light and are not to be understood as admissions about what is prior art or what is not prior art.

For the next generation of optical networks it is desirable to have fast and accurate monitoring of non-linear and linear optical induced degradation of optical wavelength channels as the channels are allocated and released. Present proposals to monitor for nonlinear optical distortions often require monitors that require complex calibration techniques and/or require expert knowledge. Therefore such proposals are difficult to implement in the field, are adapted to specific physical phenomena which may not be present in every channel, require full signal coherent reception and/or requires the presence and the knowledge of polarization dependent loss.

**SUMMARY**

One embodiment is a method. The method can include, along an optical fiber path of a coherent optical communication system, measuring optical powers at different wavelengths of an individual wavelength communication channel of the system. The method can also include forming an estimate of nonlinear optical degradation of an optical data signal along the optical fiber path based on the measured optical powers at the different wavelengths.

In some such embodiments, the measuring of optical powers can be performed at three or more different wavelengths of the individual wavelength communication channel.

In any such embodiments, the forming of the estimate can include evaluating a function linear in the optical powers.

In any such embodiments, the measuring of optical powers can be performed adjacent to or at different optical amplifiers along the optical fiber path.

Any such embodiments can further include, based on the estimate, determining whether or not to send the optical data signal along the optical fiber path.

Any such embodiments can further include, based on the estimate, determining whether or not to perform one or more adjustments of: the optical powers at the different wavelengths or wavelengths of a different wavelength communication channel, an optical data transmission rate over the optical fiber path on the individual or a different wavelength communication channel, a constellation for optical symbols for optical data transmission over the optical fiber path on the individual or a different wavelength communication channel, a number of used wavelength channels for optical data transmission over the optical fiber path via the individual or a different wavelength communication channel, or, a spacing of the used wavelength channels for optical data transmission over the optical fiber path via the individual or a different wavelength communication channel. The one or more adjustments reduce the nonlinear optical degradation on a data wavelength-channel of the individual or the different wavelength communication channel

Another embodiment is an apparatus. The apparatus can include an optical fiber path of a coherent optical communication system. The optical fiber path can include one or more optical spectrum analyzers. Each of the optical spectrum analyzers can be connected to measure optical powers at a corresponding location along the optical fiber path. Each of the optical spectrum analyzers can be configured to measure values of optical powers at different wavelengths in a same individual wavelength communication channel of the optical communication system. The apparatus can also include a computing device connected to receive the values of optical powers measured by at least one of the optical spectrum analyzers. The computing device can be configured to form an estimate of nonlinear optical degradation of an optical data signal along the optical fiber path based on the measured optical powers.

In some such embodiments, each of the optical spectrum analyzers can be configured to measure the values of optical powers at three or more of the different wavelengths of the individual wavelength communication channel.

In any such embodiments, some of the optical spectrum analyzers can be configured to measure the values of optical powers at or adjacent to different optical amplifiers along the optical fiber path.

In any such embodiments, the computing device can be configured to form the estimate by evaluating a function linear in the optical powers. For some such embodiments, the function linear in the optical powers can include a weighted sum of power spectral densities determined from the measured optical powers at the different wavelengths.

In any such embodiments, the computing device can be configured to extract the values of optical powers measured by the optical spectrum analyzers from information received on an optical supervisory channel.

Any such embodiments can further include a network controller.

The network controller can be configured, based on the estimate, to determine whether or not to send the optical data signal along the optical fiber path.

The network controller can be configured, based on the estimate, to determine whether or not to cause one or more of the above-described adjustments.

In some such embodiments, the adjustments of the optical data transmission rate, the constellation for optical symbols, the number of used wavelength channels or the spacing of the used wavelength channels can be made by one or more optical data transceivers connected to the optical fiber path.

## BRIEF DESCRIPTION

The embodiments of the disclosure are best understood from the following detailed description, when read with the accompanying FIGURES. Some features in the figures may be described as, for example, "top," "bottom," "vertical" or "lateral" for convenience in referring to those features. Such descriptions do not limit the orientation of such features with respect to the natural horizon or gravity. Various features may not be drawn to scale and may be arbitrarily increased or reduced in size for clarity of discussion. Reference is now made to the following descriptions taken in conjunction with the accompanying drawings, in which:

FIG. 1 presents a flow diagram of an example method embodiment of the disclosure;

FIG. 2 presents a block diagram of an example apparatus embodiment of the disclosure;

FIG. 3 presents a block diagram of an experimental optical communication system and further presents an example optical performance curve;

FIG. 4 presents results from an example application of power correction based upon nonlinear threshold minus the actual launch power ($\Delta$NLT) outputs in an example optical communication system using method and apparatus embodiments of the disclosure;

FIG. 5 presents evaluated offset and weight values of an example optical communication wavelength channel, as obtained using method and apparatus embodiments of the disclosure;

FIG. 6 presents an example plot of $\Delta$NLT standard deviation versus number of half-spectrum PSD points obtained from an experimental optical communication system using method and apparatus embodiments of the disclosure; and

FIG. 7 shows a relationship between the nonlinear threshold ($\Delta$NLT) and the linear-to-nonlinear ratio according to a perturbative model.

## DETAILED DESCRIPTION

The description and drawings merely illustrate the principles of the inventions. It will thus be appreciated that those skilled in the art will be able to devise various arrangements that, although not explicitly described or shown herein, embody the principles of the inventions and are included within their scope. Furthermore, all examples recited herein are principally intended expressly to be for pedagogical purposes to aid the reader in understanding the principles of the inventions and concepts contributed by the inventor(s) to furthering the art, and are to be construed as being without limitation to such specifically recited examples and conditions. Moreover, all statements herein reciting principles, aspects, and embodiments of the inventions, as well as specific examples thereof, are intended to encompass equivalents thereof. Additionally, the term, "or," as used herein, refers to a non-exclusive or, unless otherwise indicated. Also, the various embodiments described herein are not necessarily mutually exclusive, as some embodiments can be combined with one or more other embodiments to form new embodiments.

Embodiments of the invention benefit from our recognition that undesirable nonlinear optical effects can be monitored by measuring optical power intensities at different sub-channels of single wavelength-channels, e.g., a set of different intra-channel wavelengths, of an individual wavelength communication channel. Additionally we recognize that such measures can provide a basis for estimating nonlinear optical degradation of an optical data signal along the optical fiber path of optical communication systems. Further these estimates can be used to determine whether or not to perform various adjustments to the optical data signal or to optical link operating parameters so that the extent of linear or nonlinear optical degradation is within acceptable limits for the optical communication system, or, determine to not use the optical fiber path. An apparatus to facilitate implementing such procedures is disclosed.

We the inventors believe that nonlinear optical degradation can often be estimated from $\Delta$NLT, which is the difference in power optical power at the nonlinear threshold (NLT) and the actual power (P) (e.g., $\Delta$NLT = NLT-P), Here, NLT may be defined to be, e.g., the power at which a data transmission has a minimum Bit Error Ratio (BER). We inventors believe that the linear-to-nonlinear ratio (LNLR) can be estimated from input of an N-component vector of power spectral densities (e.g., $PSD_1....PSD_N$). Here, $PSD_i$ is the power spectral density at wavelength i of the individual wavelengths of a communication channel as measured along an optical fiber path (e.g., in some embodiments before digital signal processing). The $\Delta$NLT can often be estimated via a parametrical mathematical linear formula shown in eq. (1):

$$\Delta NLT\ [dB] = w_0 + \sum_{i=1}^{N} w_i PSD_i \qquad (1)$$

and the $\Delta$NLT can be used to estimate LNLR via eq. (2):

$$LNLR\ [dB] = 3 + 3 \times \Delta NLT \qquad (2)$$

Based on a pre-evaluation of the $\Delta$NLT and/or the LNLR for an individual optical wavelength channel, the offset weight $w_0$ and N weights $w_1...w_N$ of eq. (1) can be evaluated from measurements of the $PSD_i$'s of the optical path or link. Once the offset $w_0$ and N weights $w_1...w_N$ have been evaluated, the $\Delta$NLT and/or LNLT of the optical path can be evaluated at a different time, e.g., during operation, by re-measuring the PSDi's of the optical path or link and using eq. (1) and the pre-evaluated weights to estimate the new value of the $\Delta$NLT. For example the weight parameters $w_0...w_N$ can be pre-evaluated by means of an optimization algorithm (e.g., linear regression with stochastic gradient descent) to provide the desired linear fitting between the inputs (PSD) and the output targeted $\Delta$NLT and/or LNLR using eqs. (1) and (2) and/or the separate evaluation of the LNLR, e.g., from a received optical signal. For instance, such data can be collected in a series of training measurements to explore the characteristics of the optical fiber path, including: 1) the transceiver implementation (e.g., type of transceiver and applied DSP) 2) fiber characteristics (e.g., fiber type) 3) link characteristics (e.g., dispersion compensation and/or WSS filtering) and/or 4) signal characteristics (e.g., signal rate). As part of the training measurements, several optical powers should be investigated, corresponding to highly nonlinear and highly linear regions for each optical power, and signal-to-noise ratios (SNR) should be measured prior to feed forward error correction coding. The power maximizing the SNR is defined as the nonlinear threshold (NLT) for that optical fiber path. The difference between the NLT and the actual launch power of the system is called $\Delta$NLT. At the same time, PSDs relative to the optical fiber path and power are also measured. PSDs relative to an optical fiber path and fiber are labeled with $\Delta$NLT relative to that optical fiber path and power. The weights can be pre-determined by the collected labeled PSDs prior to regular operation and may be dynamically re-determined during operation, e.g., as needed when the conditions of optical fiber path changes. For example, such changes to conditions may include change(s) in components in the path, such as a change in the type or configuration or versions of transceivers, a new channel allocation/modulation paradigms, and/or placement of new optical fiber types.

One embodiment is a method.

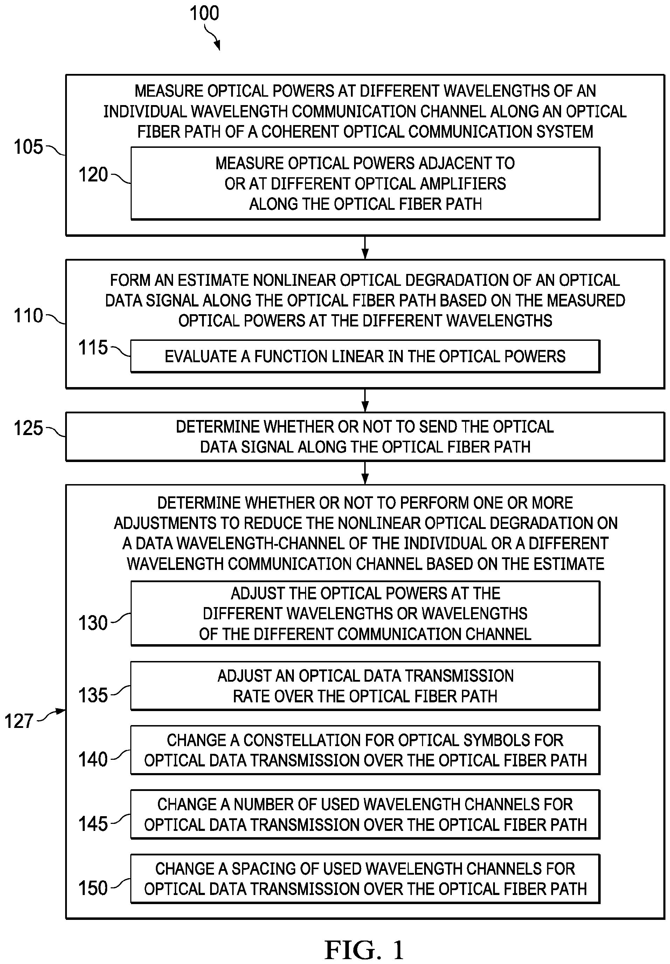

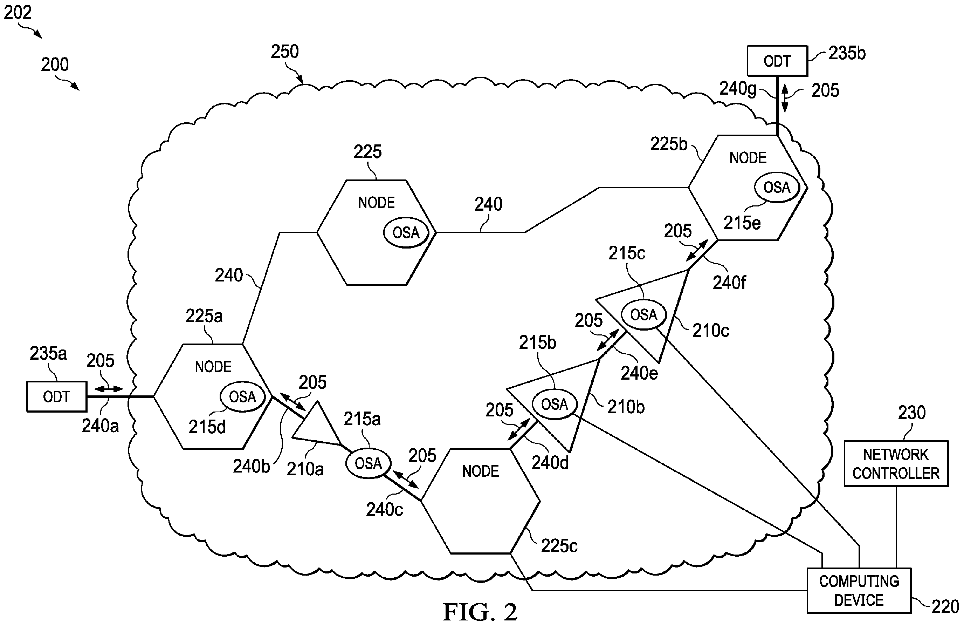

FIG. 1 presents a flow diagram of an example method embodiment 100 of the disclosure and FIG. 2 presents an example apparatus 200 embodiment of the disclosure.

With continuing reference to FIGs. 1 and 2 throughout, the method includes measuring optical powers (e.g., FIG. 1, step 105) at different wavelengths of an individual wavelength communication channel along an optical fiber path of an optical communication system (e.g., FIG. 2, optical communication system 202, optical fiber path 205). The method further includes forming an estimate of nonlinear optical degradation of an optical data signal along the optical fiber path based on the measured optical powers at the different wavelengths (e.g., FIG. 1, step 110).

The different wavelengths can be any two or more of the sub-channels of an individual wavelength communication channel e.g., a single WDM optical channel. In some embodiments, the different wavelengths are evenly distributed across the width of the individual wavelength communication channel, e.g., to facilitate collecting information about both linear and nonlinear optical degradation.

In some embodiments, the measuring optical powers (e.g., FIG. 1, step 105) can be performed at, e.g., 3, 10, 20, 30, 100, 200 or more different wavelengths of the individual wavelength communication channel, e.g., to improve the accuracy of the spectral information collected about linear and nonlinear optical degradation.

In some such embodiments, to capture the optical data signal's spectrum, the optical power measurements at the different wavelength of the individual wavelength communication channel (e.g., to provide the $PSD_1...PSD_N$ values), can be made over a frequency range greater than the channel symbol-rate of the optical data signal.

In some such embodiments, forming the estimate of nonlinear optical degradation (step 110) includes evaluating a function linear in the optical powers of the individual wavelength channel (e.g., FIG. 1, step 115). For instance, in some embodiments, the function linear in the optical powers can include a weighted sum of power spectral densities determined from the measuring of the optical powers at the different wavelengths of the individual wavelength communication channel (e.g., using eqs. (1) and (2)).

In some such embodiments, the measuring optical powers (step 105) can be performed adjacent to or at different optical amplifiers along the optical fiber path (e.g., FIG.1, step 120, FIG. 2, at least three different in-line optical amplifiers 210a, 210b, 210c). Alternatively or additionally, the measuring optical powers (step 105) can be performed at various nodes along the optical fiber path (e.g., FIG. 2, nodes 225a, 225b).

Based on the estimate of the nonlinear optical degradation (step 110), some such embodiments of the method can further include determining whether or not to send the optical data signal along the optical fiber path (e.g., FIG. 1, step 125). For instance, if it is determined that substantial optical degradation is present, the method may include determining to not use the optical fiber path, to not add the wavelength channel thereto, to drop the wavelength channel therefrom and/or to change the modulation rate and/or format on the wavelength channel. Also, if the optical degradation cannot be reduced, e.g., even by making various adjustments to operating parameters of the optical wavelength channel, as explained below, then it may be determined, as part of step 125, to switch the optical wavelength channel to a different optical fiber path of the system 202).

Based on the estimate (step 110), any such embodiments of the method can further include determining whether or not to perform one or more different adjustments, performed singly or in combination together, to reduce the nonlinear optical degradation on a data wavelength-channel of the individual wavelength communication channel or a different wavelength communication channel (e.g., FIG. 1 step 127). For instance, if it is determined that optical degradation would be substantially reduced by adjustments to operating parameter(s) of the optical fiber path, and then the optical fiber path would be useable for sending the optical data signal, appropriate adjustments of operating parameter(s) may be made to reduce nonlinear optical degradation over the optical fiber path.

For instance, the method can include determining whether to adjust the optical powers (e.g., including adjusting an optical power profile) at the different wavelengths of the individual communication channel or at wavelengths of a different wavelength communication channel (e.g., FIG. 1, step 130).

The method can further include determining whether or not to adjust an optical data transmission rate over the optical fiber path on the individual or a different wavelength communication channel based on the estimate (e.g., FIG. 1, step 135).

The method can further include determining whether or not to change a constellation for optical symbols for optical data transmission over the optical fiber path on the individual or a different wavelength communication channel based on the estimate (e.g., FIG. 1, step 140).

The method can further include determining whether or not to change a number of used optical wavelength channels for optical data transmission over the optical fiber path via the individual or a different wavelength communication channel based on the estimate (e.g., FIG. 1, step 145).

The method can further include determining whether or not to change a spacing of used wavelength channels for optical data transmission over the optical fiber path, e.g., via the individual wavelength communication channel or a different wavelength communication channel, based on the estimate (e.g., FIG. 1, step 150).

In some embodiments, for instance, if as part of the estimating (steps 110, 115), $\Delta$NLT may be determined to have a negative value and/or LNLR may be determined to have a value of less than 3, then substantial nonlinear optical degradation could be considered to be, e.g., present in the optical data signal. In such a situation, as part of step 127, it could be determined (e.g., determined by a network controller such as further described in the context of FIG. 2) to perform one or more of the adjustments of operating parameters (e.g., FIG. 1, to cause one or more of steps 130, 135, 140, 145, and 150). For instance, if $\Delta$NLT is determined to have a zero or positive value and/or LNLR is determined to have a value of 3 or greater, then the optical data signal could be considered to have a nonlinear optical degradation below a threshold and it could therefore, be determined to not require adjustment(s) to be made to such operating parameters of the optical path.

In some embodiments, the steps in the method can be repeated at a rate that is at least as high as the expected rate of change in the optical fiber path. For instance, if it was expected that one or more optical wavelength channels would be added or dropped at a particular rate (e.g., once per minute), then it would be desirable for the power of the optical amplifiers in the optical fiber path to be, at least adjusted at a comparable rate.

For any embodiments, the individual wavelength communication channel can be in any of the common optical telecommunication wavelength bands, such as the Original (e.g., about 1260 to about 1360 nm), Extended (e.g., about 1360 to about 1460 nm), Short (e.g., about 1460 to about 1530 nm), Conventional (C-band, e.g., about 1530 to about 1565 nm), Long (from e.g., 1565 to about 1625 nm) or Ultralong (e.g., about 1625 to about 1675 nm) wavelength bands. The individual wavelength communication channel can, e.g., have a width of 50, 100, 150, or 200 GHz).

Another embodiment is an apparatus.

Again, with continuing reference to FIGs. 1 and 2, embodiments of the apparatus 200 can include an optical fiber path of an optical communication system (e.g., FIG. 2 path 205, system 202). The optical fiber path can include one or more optical spectrum analyzers (e.g., FIG. 2, a plurality of OSAs $215_a$...$215_e$). Each of the OSAs can be connected to measure optical powers at a corresponding location along the optical fiber path 205 (e.g., FIG. 1, step 105). Along the optical path, each of the OSAs can be configured to measure values of optical powers at the different wavelengths (e.g., 3, 10, 20, 30, 100, 200 or more different wavelengths) in a same individual wavelength communication channel of the optical communication system.

The apparatus can also include a computing device (e.g., FIG. 2, computing device 220). The computing device can be connected to receive the values of optical powers measured by at least one of the OSAs. The computing device can be configured to form an estimate of nonlinear optical degradation of an optical data signal along the optical fiber path based on the measured optical powers (e.g., FIG. 1, step 110), e.g., based on the estimates using eq. (1) and (2).

In some such embodiments, some of the optical spectrum analyzers can be configured to measure optical power spectra at or adjacent to different optical amplifiers along the optical fiber path (e.g., FIG. 1, step 120; FIG. 2, OSAs 215a, 215b, 215c at or adjacent to the three in-line optical amplifiers 210a, 210b, 210c, respectively).

In some such embodiments, some of the optical spectrum analyzers can be configured to measure optical power spectra the optical fiber path at one or more optical nodes along the optical fiber path (e.g., OSAs 215d, 215e, at nodes 225a, 225b respectively).

In some such embodiments, the computing device can be configured to form the estimate by evaluating a function linear in the optical powers, e.g., the function linear in the optical powers including a weighted sum of power spectral densities determined from the measuring optical powers at the different wavelengths (e.g., FIG.1, step 115, eq. (1)). For instance, the computing device can include an integrated circuit (e.g., an application specific integrated circuit). The computing device may include a non-transient volatile memory module to store the offset weight and weight values (e.g., $w_o...w_N$) and the measured values of optical powers (e.g., a stored telemetry data-base) and a central processing unit that is programmed to perform operations on the offset weight and weight values and the measure values of optical powers to form the estimate of nonlinear optical degradation. In some embodiments, the computing device can be part of one of the OSAs in the optical fiber path while in other embodiments; the computing device can be a separate device. In some such embodiments, the computing device can be connected to an optical node of the optical fiber path (e.g., FIG. 2, monitor 220 connected to nodes 225c).

In some such embodiments, the computing device can be configured to extract the values of optical powers measured by the OSAs from information received on an optical supervisory channel. In some embodiments the computing device is configured to send the extracted values of optical powers measured by the optical spectrum analyzers, over the optical supervisory channel, to a network controller. As familiar to those skilled in the pertinent art, optical supervisory channels can be configured carry a variety of information about optical signals as well as information about the operating conditions along an optical path. For instance, each of the OSAs in the optical fiber path can be configured to send the values of optical powers via the optical supervisory channel to the computing device which can then use the sent values to form the estimate of nonlinear optical degradation.

Some embodiments of the apparatus further include a network controller (e.g., FIG. 2, optical network controller 230).

Embodiments of the network controller can be configured, based on the estimate(s), to determine whether or not to send the optical data signal along the optical fiber path 205 (e.g., FIG. 1, step 125).

Embodiments of the network controller can be configured, based on the estimate(s), to determine whether or not to cause one or more adjustments of optical operating parameters to be performed (e.g., FIG. 1 step 127). The one of more adjustments can include adjusting the optical powers (e.g., including adjusting an optical power profile) at the different wavelengths of the individual wavelength communication channel or wavelengths of a different wavelength communication channel (step 130). For instance, the network controller can cause one or more amplifiers (e.g., one or more of in-line amplifiers 210a, 210b, 210c) in the optical fiber path to increase or decrease the optical power at the different wavelengths of the individual wavelength communication channel, or at wavelengths of a different wavelength communication channel, in the path 205.

As discussed in the context of FIG. 1, the one of more adjustments (e.g., as directed by the network controller) can include: adjusting an optical data transmission rate over the optical fiber path on the individual or a different wavelength communication channel (step 135); changing a constellation for optical symbols for optical data transmission over the optical fiber path on the individual or a different wavelength communication channel (step 140); changing a number of used wavelength channels for optical data transmission over the optical fiber path via the individual or a different wavelength communication channel (step 145); or adjusting a spacing of the used wavelength channels for optical data transmission over the optical fiber path via the individual or a different wavelength communication channel (step 150). Any such adjustments can be implemented to reduce the optical degradation (e.g., linear and/or non-linear optical degradation) on a data wavelength-channel of the individual or the different wavelength communication channel.

For instance, in some embodiments, the network controller can cause one or more optical data transceivers, ODTs, in the optical fiber path (e.g., FIG. 2, ODT 235a, 235b) to make the adjustment or one or more of the optical data transmission rate, the constellation for optical symbols, the number of used wavelength channels or the spacing of the used wavelength channels the optical power in the optical path or another optical path. For instance, one or more optical nodes (e.g., nodes 225a, 225b, 225c) may include reconfigurable optical add drop multiplexers (ROADM) whose array of optical data transmitters and receivers can be directed by the network controller to change the number of used wavelength channels, the spacing of the used wavelength channels and/or the optical power in the wavelength channels.

In some embodiments, to facilitate the accurate estimation of nonlinear optical degradation (e.g., as part of steps 110, 115) the network controller can cause the update and storage of the offset weight and set of weight values $(w_o...w_N)$ in the computing device for subsequent applications to form the estimate of nonlinear optical degradation.

Embodiments of the apparatus can include multiple spans of optical fibers (including pairs of fibers) configured to carry the individual wavelength communication channel and other wavelength communication channels. Each such optical fiber may be connected to carry such optical wavelength channel(s) in a single, or both, directions along the optical fiber path (e.g., FIG. 2, optical fiber spans 240a..240g of path 205).

Embodiments of the apparatus can be part of an optical network (e.g., FIG. 2, optical network 250 under the management of an optical network controller 230) which in turn can be part of the optical communication system 202. Embodiments of the optical network may include part or all of long-haul, regional, or metropolitan networks for the communication of wavelength division multiplexing (WDM) transmissions via a set of the wavelength communication channels.

The optical communication system 202 can be any system where significant nonlinear optical degradation can be present. For instance, in some embodiments, the optical communication system 202 can be a coherent optical communication system, in which the optical data signal is generated by phase-modulating data onto an optical carrier , e.g., according to binary phase shift keying, quadrature phase shift keying, quadrature amplitude modulation or another format for phase shift keying. In some embodiments, the optical communication system 202 can be a non-coherent optical communication system.

Embodiments of the OSA can be any device able to measure optical power at various wavelengths (e.g., two or more wavelengths) across a single optical channel to thereby provide the data to construct a PSD curve. In some embodiments, the OSA can be, or be included in, an optical power monitor configured to extract several points per channel slot (e.g. about 100 points for each 50 GHz slot in some embodiments).

Herein, embodiments of various optical amplifiers can include erbium-doped fiber amplifiers (EDFA), forward or backward Raman amplifiers, hybrid Raman-EDFA amplifiers or other optical amplifiers familiar to those skilled in the pertinent art that are capable of changing the power of the optical signal in the optical fiber path, e.g., semiconductor optical amplifiers.

Embodiments of the optical data transceivers include any device capable of sending information encoded with optical signals in one direction and receiving information via optical signals from the opposite direction.

Experimental Testing

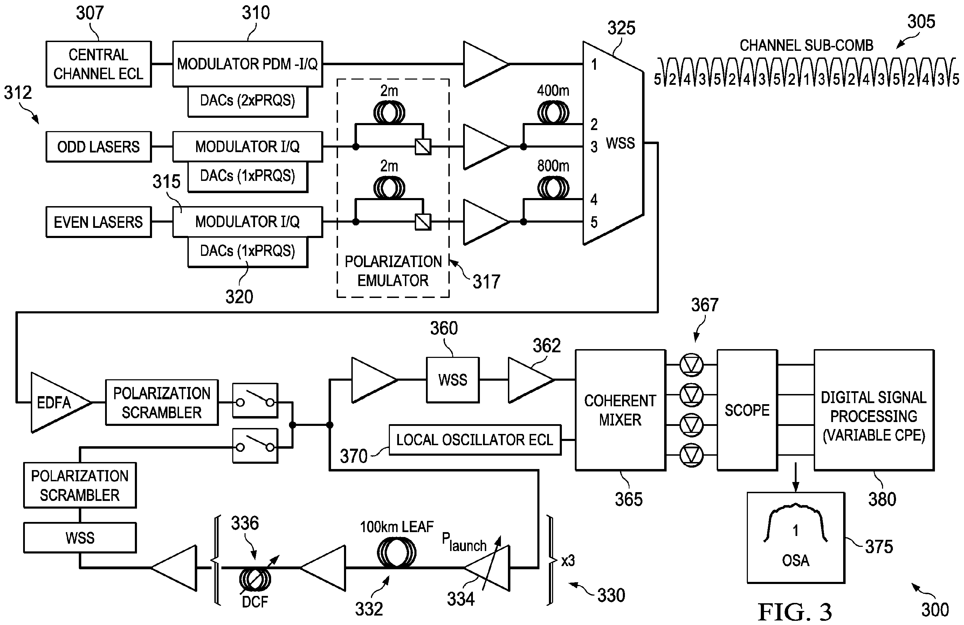

FIG. 3 presents a block diagram of an experimental WDM optical communication system 300 and further presents example optical performance curves with varying optical path distances.

The system 300 was configured for the transmission of 81 coherent quadrature phase-shift keying (QPSK) wavelength channels, in parallel. The investigated central optical wavelength channel (e.g., FIG. 3, individual channel 1) is surrounded by a comb of 79 wavelength channels, which may be equally wavelength-spaced. FIG. 3 shows a sub-comb 305 of the 80 wavelength channels, which includes the central wavelength channel 1 and 20 surrounding channels (e.g., FIG. 3, channels labeled as 2, 3, 4, 5 .....). The data-carrying central channel 1 was generated by passing light from an external-cavity laser 307 (ECL) with a linewidth of about 100 KHz into polarization division multiplexed (PDM), in-phase/quadrature-phase (I/Q) optical data modulators 310 to be data-modulated. The investigated central channel was then multiplexed with two combs, one of 39 wavelength channels and one of 40 wavelength channels formed from optical carriers of 100 GHz-spaced distributed feedback lasers 312, which are data-modulated by dedicated optical wavelength channel, I/Q optical data modulators 315, followed by polarization emulation (via polarization emulator 317) of output optical signals therefrom, i.e., to approximately pseudo-randomly simulated polarization division multiplexing. For the testing, each optical data modulator 315 was driven by digital-to-analog converters 320 (DACs) to produce optical data at 65 Gbit/s per polarization, e.g., from independent 216-long pseudo-random quaternary sequences (PRQSs). All optical channels were optically multiplexed via a wavelength selective switch 325 (WSS) that selected every other channel from each input port. The wavelength division multiplex light (WDM) was sent to a looped transmission light path link 330 of several (e.g., three as illustrated) 100km-long large effective-area fiber (LEAF) spans 332, with 4.3 ps/nm/km dispersion at 1550 nm. Before each span 332, the multiplex was amplified through an in-line erbium-doped fiber amplifier 334 (EDFA). After each span 332, in the EDFA mid-stage, the presence or the absence of a dispersion-compensating fiber 336 (DCF) enabled a dispersion map between completely unmanaged and managed with a residual dispersion per span (RDPS) of 40 ps/nm. At the receiver end, the investigated central channel 1 was extracted with a WSS 360. The last optical amplifier 362 ensured an about constant optical power to feed one input of the coherent optical mixer 365 whose optical outputs were monitored with two balanced pairs of photodiodes 367. An ECL local oscillator 370 with also a linewidth around 100 KHz was coupled to the other optical input of the optical mixer 365. The photocurrents were sampled using an optical spectrum analyzer 375 (OSA) with 20 GHz electrical bandwidth. 100 μs-long series of samples were stored and processed offline on a computer 380. The computer 380 was programmed to perform digital signal processing (DSP) including skew adjustments and normalization, polarization demultiplexing with blind equalization based on constant-modulus algorithm, frequency offset compensation.

After sampling and before DSP, the PSD was estimated by using rectangular windowing with Bartlett's method (M.S. Bartlett: 'Smoothing Periodograms from Time-Series with Continuous Spectra,' Nature, vol. 161, pp. 686-687, 1948. DOI:10.1038/161686a0, incorporated by reference herein in its entirety). This returned a PSD as it was measured by the OSA 375 (see example PSD curve 1 in OSA 375). The experiment outcomes were used for optimizing the weights (optimization using as metric the mean-squared-error (MSE) where power correction is the dependent variable and the PSD vector entries are the explanatory variables).

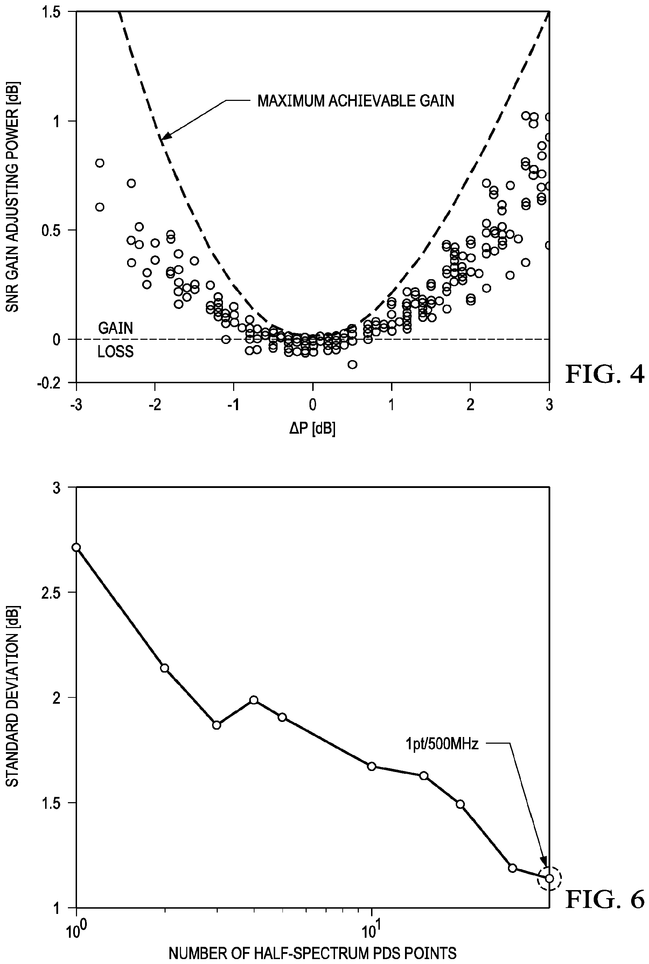

FIG. 4 presents results from an example application power correction based upon ΔNLT outputs in an example optical communication system (e.g., FIG. 3, test system 300) as determined using method and apparatus embodiments of the disclosure (e.g., FIGs. 1-2, method 100 and apparatus 200). The vertical axis shows the SNR gain for power adjustments presented in the interval ±3 dBm around the actual optimal power (corresponding to ΔNLT=0). The actual launch power can be corrected according to the predicted (ΔNLT), resulting in eq (3):

$$\Delta SNR = SNR(P + (\widehat{\Delta NLT})) - SNR(P)\ [dB] \qquad (3)$$

where SNR(P) correspond to the bell curve, i.e., SNR at a given power P. The dashed line represents the maximum achievable SNR gain according to Gaussian-noise model theory.

We inventors believe that the losses are reduced on the bell-curve minimum, as shown in FIG. 4, since they depend on the slope of the bell curve (e.g., slope=+1 in linear region; slope=-2 in nonlinear region; slope=0 at the minimum region). Therefore power correction performed on the bell-curve minimum region has little effect on SNR gain, while power correction in a linear or nonlinear region increases the SNR gain. Note that, the system can be prevented from producing losses inhibiting any power correction if the ΔNLT is smaller than a given threshold.

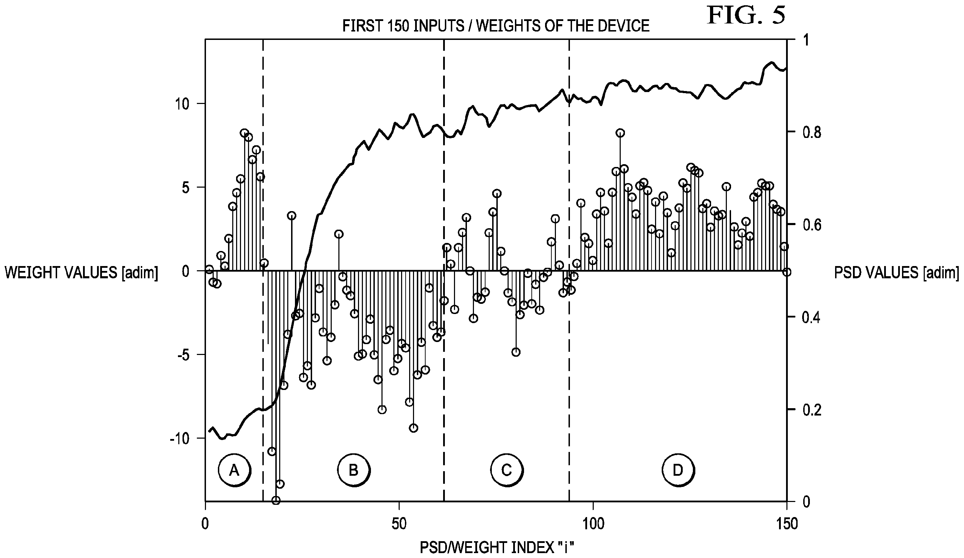

FIG. 5 presents evaluated offset and weight values (e.g., using eq. 1, to evaluate $w_0...w_N$, and an input PSD curve) of an example optical communication wavelength channel, as obtained using method and apparatus embodiments of the disclosure. After the pre-evaluation to estimate the weights, the ΔNLT was evaluated according to eq (1). As further explained below the ΔNLT, a weighted integration of the input vectors, if positive, corresponds to the linear regime, and, if negative corresponds to the nonlinear regime. The solid line in the figure shows the shape of the input PSDi curve (e.g., the first 150 points of PSDi) and open circles and vertical lines show the relative weights ($w_i$) determined.

In FIG. 5, vertical dashed lines divide the input PSD curve into 4 regions. Region A corresponds to a dark spectral region with no launched light. The light power found in this region corresponds to amplified spontaneous emission (ASE) noise. Weights in this region are positive, because they contribute to the linear region. Region B includes a steep slope part of the PSD curve. This region is the boundary of the modulated signal PSD and has a wavelength range that enlarges or shrinks with the nonlinear effects. The weights here are negative since they contribute to the nonlinear region. The weights are relatively high since they account for the nonlinearities in this region. Region C corresponds to a transition between the upper plateau and the modulation boundary. In Region C the weights oscillate around zero and substantially sum to zero, suggesting that these weights provide, at most, limited information on the noise quality. Region D corresponds to an upper plateau of the PSD around the middle of the optical wavelength channel, where the PSD is high. Similar to region A, region D includes information regarding linear noise as signified by the positive weights therein.

FIG. 6 presents an example plot of ΔNLT standard deviation versus number of half-spectrum PSD points obtained from an experimental optical communication system using method and apparatus embodiments of the disclosure. The ΔNLT standard deviation is a measure of the accuracy of performance improvement from power correction such as shown in FIG. 4. As illustrated the ΔNLT standard deviation decreased monotonically for an increasing number of PSD points, reaching a value about 1 dB at a PSD number, which in some embodiments, can correspond to obtaining about 1 PSD measurement per 500 MHz interval in the optical wavelength channel (e.g., sub-comb channel).

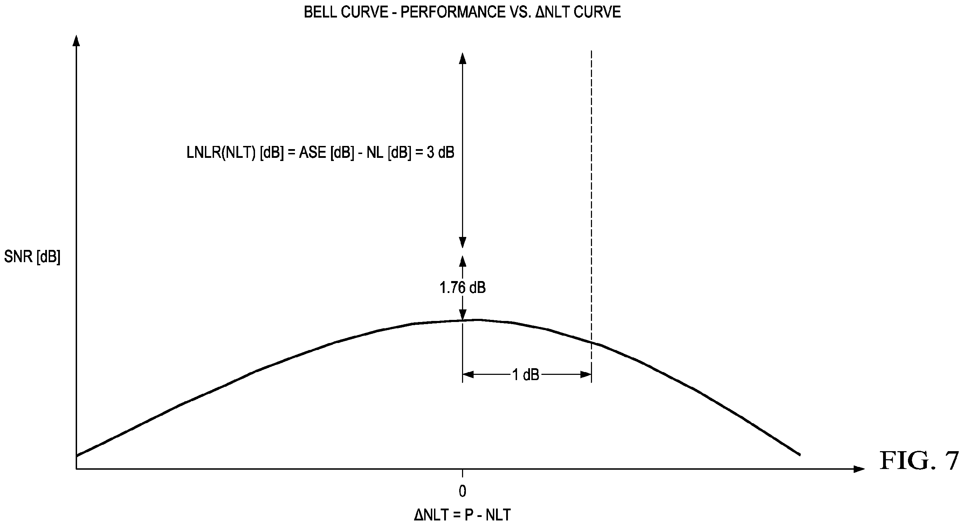

To further explain aspects of the disclosure, FIG. 7 shows a relationship between the nonlinear threshold (ΔNLT) and the linear-to-nonlinear ratio according to a perturbative model. Often the estimation of the performance of a given optical fiber path as a function of the optical power variation is made with the Gaussian-noise (GN) model. The GN model is a perturbative model which accounts for the nonlinear optical distortions as an extra additive Gaussian noise term whose power depends on the launch power accordingly to a cubic proportion. It can be expressed in the formula of eq. (4):

$$SNR = \frac{P}{P_{ASE} + P_{TRX} + P_{NL}} = \frac{P}{P_{ASE} + P_{TRX} + a_{NL} P^3} \tag{4}$$

Herein, SNR equals signal-to-noise ratio, $P_{ASE}$ equals amplified spontaneous emission noise power, $P_{TRX}$ equals transceiver impairments noise, $P_{NL}$ equals nonlinear distortion power, $a_{NL}$ equals nonlinear coefficient of the optical fiber path, and P equals is the launch power per channel. Eq (4) gives the bell curve shown in FIG. 7, where the SNR is expressed as a function of the launch power, specifically FIG. 1 shows qualitative bell curve, normalized to the NLT, (e.g., the optimal launch power).

As shown in FIG. 7, at the NLT the LNLR equals 3 dB, while moving away from the NLT the LNLR follows eq. (5):

$$LNLR = 3\,dB - 3(P_{NLT} - P) = 3\,dB - 3\Delta NLT \tag{5}$$

The ability to evaluate the optimal power provides a strategy to monitor amounts of linear and nonlinear optical degradation effects acting on an optically transmitted signal, and provides a quantitative means of assess the consequences of making adjustment to the signal and or the optical fiber path to enhance or control system performance and parameters such as discussed in the context of FIGs. 1 and 2.

We the inventors believe that the dependency of the signal-to-noise ratio (SNR) on total channel power approximately varies over a bell-shaped curve as the total power of an individual wavelength channel is varied (see e.g., FIGs. 4 and 7). In such a variation, a maximum SNR on the curve corresponds to $\Delta NLT = 0$. As the total power causes the SNR to vary from the maximum value, the change in total power on the optical wavelength channel is the value of $\Delta NLT$ for that SNR. Thus, by measuring the SNR for various values of the total channel power, one may identify the bell-shaped curve for use in determining $\Delta NLT$ from the SNR during training. Thus, direct measurements of the SNR as a function of the total power of and optical wavelength channel can be used during training to obtain values of $\Delta NLT$ so that the offset $w_0$ and the weights $w_1 \ldots w_N$ can be obtained from the solutions of eq (1).

Those skilled in the art to which this application relates will appreciate that other and further additions, deletions, substitutions and modifications may be made to the described embodiments.

**Claims**

1. A method, comprising:

   along an optical fiber path of a coherent optical communication system, measuring optical powers at different wavelengths of an individual wavelength communication channel of the system; and
   forming an estimate of nonlinear optical degradation of an optical data signal along the optical fiber path based on the measured optical powers at the different wavelengths.

2. The method of claim 1, wherein the measuring optical powers is performed at three or more of the different wavelengths of the individual wavelength communication channel.

3. The method of any of the preceding claims, wherein the forming the estimate includes evaluating a function linear in the optical powers.

4. The method of any of the preceding claims, wherein the measuring optical powers is performed adjacent to or at different optical amplifiers along the optical fiber path.

5. The method of any of the preceding claims, further including, based on the estimate, determining whether or not to send the optical data signal along the optical fiber path.

6. The method of any of the preceding claims, further including, based on the estimate, determining whether or not to perform one or more adjustments of:

   the optical powers at the different wavelengths or wavelengths of a different wavelength communication channel,
   an optical data transmission rate over the optical fiber path on the individual or a different wavelength communication channel,

a constellation for optical symbols for optical data transmission over the optical fiber path on the individual or a different wavelength communication channel,

a number of used wavelength channels for optical data transmission over the optical fiber path via the individual or a different wavelength communication channel, or

a spacing of the used wavelength channels for optical data transmission over the optical fiber path via the individual or a different wavelength communication channel, or

wherein the one or more adjustments reduce the nonlinear optical degradation on a data wavelength-channel of the individual or the different wavelength communication channel.

7. An apparatus, comprising:

an optical fiber path of a coherent optical communication system, the optical fiber path including one or more optical spectrum analyzers, each of the optical spectrum analyzers being connected to measure optical powers at a corresponding location along the optical fiber path, and, being configured to measure values of optical powers at different wavelengths in a same individual wavelength communication channel of the optical communication system; and

a computing device being connected to receive the values of optical powers measured by at least one of the optical spectrum analyzers and being configured to form an estimate of nonlinear optical degradation of an optical data signal along the optical fiber path based on the measured optical powers.

8. The apparatus of claim 7, wherein each of the optical spectrum analyzers is configured to measure the values of optical powers at three or more different wavelengths of the individual wavelength communication channel.

9. The apparatus of claim 7 or 8, wherein some of the optical spectrum analyzers are configured to measure the values of optical powers at or adjacent to different optical amplifiers along the optical fiber path.

10. The apparatus of claim 7, 8, or 9, wherein the computing device is configured to form the estimate by evaluating a function linear in the optical powers.

11. The apparatus of claim 10, wherein the function linear in the optical powers includes a weighted sum of power spectral densities determined from the measuring optical powers at the different wavelengths.

12. The apparatus of claim of any of the preceding claims, wherein the computing device is configured to extract the values of optical powers measured by the optical spectrum analyzers from information received on an optical supervisory channel.

13. The apparatus of any of the preceding claims, further including a network controller configured, based on the estimate, to determine whether or not to send the optical data signal along the optical fiber path.

14. The apparatus of any of the preceding claims, further including a network controller configured, based on the estimate, to determine whether or not to cause one or more adjustments of:

the optical powers at the different wavelengths or wavelengths of a different wavelength communication channel,

an optical data transmission rate over the optical fiber path on the individual or a different wavelength communication channel,

a constellation for optical symbols for optical data transmission over the optical fiber path on the individual or a different wavelength communication channel,

a number of used wavelength channels for optical data transmission over the optical fiber path via the individual or a different wavelength communication channel, or

a spacing of the used wavelength channels for optical data transmission over the optical fiber path via the individual or a different wavelength communication channel;

wherein the one or more adjustments reduce the nonlinear optical degradation on a data wavelength-channel of the individual or a different wavelength communication channel.

15. The apparatus of claim 14, wherein the adjustments of the optical data transmission rate, the constellation for optical symbols, the number of used wavelength channels or the spacing of the used wavelength channels is made by one or more optical data transceivers connected to the optical fiber path.

100

MEASURE OPTICAL POWERS AT DIFFERENT WAVELENGTHS OF AN INDIVIDUAL WAVELENGTH COMMUNICATION CHANNEL ALONG AN OPTICAL FIBER PATH OF A COHERENT OPTICAL COMMUNICATION SYSTEM

105

120 — MEASURE OPTICAL POWERS ADJACENT TO OR AT DIFFERENT OPTICAL AMPLIFIERS ALONG THE OPTICAL FIBER PATH

FORM AN ESTIMATE NONLINEAR OPTICAL DEGRADATION OF AN OPTICAL DATA SIGNAL ALONG THE OPTICAL FIBER PATH BASED ON THE MEASURED OPTICAL POWERS AT THE DIFFERENT WAVELENGTHS

110

115 — EVALUATE A FUNCTION LINEAR IN THE OPTICAL POWERS

125 — DETERMINE WHETHER OR NOT TO SEND THE OPTICAL DATA SIGNAL ALONG THE OPTICAL FIBER PATH

DETERMINE WHETHER OR NOT TO PERFORM ONE OR MORE ADJUSTMENTS TO REDUCE THE NONLINEAR OPTICAL DEGRADATION ON A DATA WAVELENGTH-CHANNEL OF THE INDIVIDUAL OR A DIFFERENT WAVELENGTH COMMUNICATION CHANNEL BASED ON THE ESTIMATE

130 — ADJUST THE OPTICAL POWERS AT THE DIFFERENT WAVELENGTHS OR WAVELENGTHS OF THE DIFFERENT COMMUNICATION CHANNEL

135 — ADJUST AN OPTICAL DATA TRANSMISSION RATE OVER THE OPTICAL FIBER PATH

127 —

140 — CHANGE A CONSTELLATION FOR OPTICAL SYMBOLS FOR OPTICAL DATA TRANSMISSION OVER THE OPTICAL FIBER PATH

145 — CHANGE A NUMBER OF USED WAVELENGTH CHANNELS FOR OPTICAL DATA TRANSMISSION OVER THE OPTICAL FIBER PATH

150 — CHANGE A SPACING OF USED WAVELENGTH CHANNELS FOR OPTICAL DATA TRANSMISSION OVER THE OPTICAL FIBER PATH

FIG. 1

FIG. 2

FIG. 3

FIG. 4

FIG. 6

FIG. 5

FIRST 150 INPUTS / WEIGHTS OF THE DEVICE

WEIGHT VALUES [adim]

PSD VALUES [adim]

PSD/WEIGHT INDEX "i"

EP 3 754 868 A1

BELL CURVE - PERFORMANCE VS. ΔNLT CURVE

SNR [dB]

LNLR(NLT) [dB] = ASE [dB] - NL [dB] = 3 dB

1.76 dB

1 dB

0

ΔNLT = P - NLT

FIG. 7

EP 3 754 868 A1

Europäisches
Patentamt

European
Patent Office

Office européen
des brevets

**EUROPEAN SEARCH REPORT**

Application Number

EP 19 30 5782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/215850 A1 (CIENA CORP [US]; ROBERTS KIM [CA]) 29 November 2018 (2018-11-29) * paragraph [0014] - paragraph [0016]; claims 1-11; figures 2,5,6 * * paragraph [0024] - paragraph [0027] * * paragraph [0032] - paragraph [0036] * * paragraph [0104] - paragraph [0108] * ----- | 1-15 | INV. H04B10/079 H04B10/2543 |
| X | US 2003/137653 A1 (KAWABATA KEISUKE [JP]) 24 July 2003 (2003-07-24) * paragraph [0023] - paragraph [0024]; claims 1-4; figure 3 * * paragraph [0032] * * paragraph [0083] - paragraph [0089] * ----- | 1-15 | |
| A | WO 2014/019631 A1 (ERICSSON TELEFON AB L M [SE]; NIJHOF JEROEN [IT] ET AL.) 6 February 2014 (2014-02-06) * paragraph [0005] - paragraph [0018]; claims 1-3; figure 10 * ----- | 1-15 | TECHNICAL FIELDS SEARCHED (IPC) |
| A | US 2004/208534 A1 (BOERTJES DAVID W [CA] ET AL) 21 October 2004 (2004-10-21) * paragraph [0006] - paragraph [0015]; claims 1-5; figures 1,2A * ----- | 1-15 | H04B |

The present search report has been drawn up for all claims

| Place of search | Date of completion of the search | Examiner |
|---|---|---|
| Munich | 26 November 2019 | Gäde, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 30 5782

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2019

| Patent document cited in search report | | Publication date | Patent family member(s) | | Publication date |
|---|---|---|---|---|---|
| WO 2018215850 | A1 | 29-11-2018 | NONE | | |
| US 2003137653 | A1 | 24-07-2003 | JP 2003166904 A | | 13-06-2003 |
| | | | US 2003137653 A1 | | 24-07-2003 |
| WO 2014019631 | A1 | 06-02-2014 | EP 2880790 A1 | | 10-06-2015 |
| | | | US 2015304035 A1 | | 22-10-2015 |
| | | | WO 2014019631 A1 | | 06-02-2014 |
| US 2004208534 | A1 | 21-10-2004 | US 2004208534 A1 | | 21-10-2004 |
| | | | US 2007212064 A1 | | 13-09-2007 |

EPO FORM P0459

For more details about this annex : see Official Journal of the European Patent Office, No. 12/82

**REFERENCES CITED IN THE DESCRIPTION**

**Non-patent literature cited in the description**

- **M.S. BARTLETT.** Smoothing Periodograms from Time-Series with Continuous Spectra. *Nature,* 1948, vol. 161, 686-687